# EUROPÄISCHE PATENTSCHRIFT

(11) **EP 0 536 674 B1**
(45) Veröffentlichungstag und Bekanntmachung des Hinweises auf die Patenterteilung: **05.08.1998**
(21) Anmeldenummer: 92116978.5
(22) Anmeldetag: 05.10.1992
(51) Int. Cl.: B29C 59/02, B44C 1/24, B32B 27/36, B29C 33/68

(54) **Verfahren zur Herstellung oberflächlich strukturierter, dekorativer Schichten**
Method for the production of surface structured decorating sheets
Procédé pour la fabrication de feuilles de décoration avec une surface structurée

(30) Priorität: 07.10.1991 DE 4133142
(43) Veröffentlichungstag der Anmeldung: 14.04.1993
(73) Patentinhaber: HOECHST AKTIENGESELLSCHAFT, 65926 Frankfurt am Main (DE)
(72) Erfinder: Beer, Ekkehard, W-6208 Bad Schwalbach (DE); Schad, Alfred, W-6200 Wiesbaden (DE)
(74) Vertreter: Zounek, Nikolai, Dipl.-Ing.

(56) Entgegenhaltungen:
- EP-A- 115 033
- EP-A- 151 873
- US-A- 3 507 733
- DATABASE WPI Week 7906, Derwent Publications Ltd., London, GB; AN 79-11039B & JP-A-53 149 259 (DAINIPPON PRINTING) 26. Dezember 1978
- DATABASE WPI Week 7501, Derwent Publications Ltd., London, GB; AN 75-00365W & JP-A-49 042 771 (TOPPAN SHOJI) 22. April 1974
- DATABASE WPI Week 7823, Derwent Publications Ltd., London, GB; AN 78-41125A & JP-A-53 046 353 (DAINIPPON PRINTING) 25. April 1978

## Beschreibung

Die Erfindung betrifft die Verwendung einer Folie mit strukturierter Oberfläche, welche erhalten wurde durch Prägen einer prägbaren Folie.

Zur Herstellung von dekorativen Schichtstoffplatten wird im allgemeinen zunächst Natronkraftpapier mit einem niedermolekularen Duroplastharz imprägniert und bei 120 bis 160 °C getrocknet, wobei das Harz teilweise aushärtet. Eine Anzahl dieser vorbehandelten Papiere wird übereinandergestapelt, sie bilden den Kern der späteren Schichtstoffplatte. Auf eine oder auf beide äußeren Papierlagen des Stapels aus den vorbehandelten Papieren wird eine dekorative Papierschicht und gegebenenfalls eine abdeckende Papierschicht aufgelegt, die gewöhnlich ebenfalls in entsprechender Weise mit einem Duroplastharz vorbehandelt sind. Der Stapel aus den übereinanderliegenden Schichten wird bei einer Temperatur von 120 bis 180 °C unter einem Druck von mindestens 70 bar zu einer planen Platte verpreßt. Während dieses Vorgangs fließen die Harte und werden gehärtet, wodurch die einzelnen Lagen des Kerns und der Oberflächenschicht ein in sich geschlossenes, nicht schmelzbares, starres vernetztes Produkt bilden.

Die dekorative Oberflächenstrukturierung der Schichtstoffplatte entsteht durch Abziehen der dekorativen Papierschicht von der abdeckenden Papierschicht. Als abdeckende Papierschicht werden wegen der guten Trennwirkung normalerweise mit Silikonharz beschichtete Papiere eingesetzt. Diese haben jedoch den Nachteil, daß sie verhältnismäßig teuer sind.

Man ist deshalb dazu übergegangen, statt der mit Silikonharz beschichteten Papiere als Trennfolie eine Kunststoffolie einzusetzen. Die DE-OS 29 07 707 beschreibt ein Trennmedium aus einer Papierschicht und/oder einer Kunststoffolie als Strukturgeber bei der Herstellung dekorativer Schichtstoffplatten, auch Metallfolien oder Metallplatten können hierzu verwendet werden. Als Nachteil hat sich hierbei erwiesen, daß das insbesondere faltenfreie Einlegen der Kunststofftrennfolie vor dem Verpressen der übereinanderliegenden harzgetränkten Papierschichten ein Vorgang ist, der höchste Präzision erfordert, denn jede noch so geringe Unebenheit bedingt durch Faltenbildung oder Einschlüsse bildet sich auf der Schichtstoffplattenoberfläche ab und führt sofort zu Ausschußware. Das Einlegen der Kunststofftrennfolie erfordert deshalb bei der Herstellung der Schichtstoffplatten einen erheblichen zeitlichen und personellen Aufwand, was als großer Nachteil im Hinblick auf die Wirtschaftlichkeit der Herstellung der Schichtstoffplatten anzusehen ist.

Die EP-A-0 216 230 beschreibt eine Verbundkombination als strukturgebende Trennfolie. Diese Trennfolie ist aus einem relative steifen Papier als Kernschicht und ein- oder beidseitig aufgebrachten Kunststoffschichten aufgebaut. Nachteilig an dieser Trennfolie ist die nicht wirtschaftliche Recyclierbarkeit infolge des inhomogenen, schlecht trennbaren Papier/Kunststoffverbundes.

Aufgabe der vorliegenden Erfindung war es deshalb, eine strukturierte Trennfolie zur Herstellung dekorativer Schichtstoffplatten zur Verfügung zu stellen, die sich ohne die Gefahr von Unebenheiten durch Faltenbildung oder Einschlüsse schnell, insbesondere maschinell, auflegen läßt und die darüber hinaus auch noch preiswert ist und einen homogenen, recyclierbaren Verbund darstellt.

Gelöst wird diese Aufgabe durch die Verwendung eine Folie mit strukturierter Oberfläche, erhalten durch Prägen einer prägbaren, gestreckten, biaxial orientierten und thermofixierten Mehrschichtfolie aus Polyestern, wobei diese Folie zwei außenliegende Polyesterschichten aus Polyethylenterephthalat umfaßt, zwischen die eine niedriger schmelzende Polyesterschicht aus einem Copolyester mit Ethylenterephthalat- und Ethylenisophthalateinheiten eingebettet ist, wobei diese Zwischenschicht aus einem Copolyester besteht, der zwischen 5 und 95 Gew.-% Ethylenisophthalateinheiten enthält, und die außenliegende Polyesterschicht, von der die Prägung ausgehend vorgenommen wird, in ihrer Stärke dünner ist als die zweite außenliegende Polyesterschicht zur Herstellung oberflächlich strukturierter Schichten. Eine solche prägbare. Mehrschichtfolie ist in der EP-A-0 115 033 beschrieben, auf die an dieser Stelle ausdrücklich Bezug genommen wird. Sie wird als ungeprägte Folie auf einen Träger, beispielsweise einen Bucheinband, aufkaschiert und anschließend unter Druck- und Temperatureinwirkung geprägt, wodurch ein gewünschtes reliefartiges Muster entsteht.

Es wurde nun überraschend gefunden, daß sich diese Folie hervorragend als Trennfolie für die Herstellung von oberflächenstrukturierten Schichtstoffplatten eignet. Dazu wird die prägbare Folie gemäß EP-A-0 115 033 mit dem gewünschten Muster, beispielsweise einer Holzoberflächenstruktur, geprägt. Der Vorteil bei dieser Folie ist insbesondere darin zu sehen, daß sie die aufgeprägte Struktur später auch bei erhöhtem Druck und bei erhöhter Temperatur beibehält, so daß sie ihr Muster auf die Oberfläche einer Schichtstoffplatte übertragen kann.

Die prägbare Polyesterfolie ist eine Mehrschichtfolie, deren kennzeichnende Merkmale darin zu sehen sind, daß die Folie biaxial gestreckt ist, daß die Zwischenschicht aus einem Copolyester besteht, der zwischen 5 und 95 Gew.-% Ethylenisophthalateinheiten enthält, und daß die außenliegende Polyesterschicht, von der die Prägung ausgehend vorgenommen wird, in ihrer Stärke dünner ist als die zweite außenliegende Polyesterschicht.

Es hat sich gezeigt, daß durch Abdeckung der den niedrigeren Schmelzpunkt aufweisenden Mittelschicht durch die höher schmelzenden Polyesterschichten die Verprägbarkeit sehr gut ist, daß keine Klebeneigung zum Werkzeug während des Prägevorganges entsteht und daß höhere Temperaturen beim Prägevorgang angewandt werden können, so daß die Prägetiefe auch bei Belastung bei höheren Temperaturen erhalten bleibt.

In bevorzugter Weise wird für die Außenschicht Polyethylenterephthalat mit einer Schmelztemperatur zwischen 240 und 260 °C und für die Zwischenschicht ein Copolyester mit einer Schmelztemperatur zwischen 190 und 230 °C eingesetzt.

Die Mehrschichtfolie besitzt einen asymmetrischen Aufbau; die außenliegende Polyesterschicht, von der aus die Prägung vorgenommen wird, ist in ihrer Stärke dünner als die zweite außenliegende Polyesterschicht, welche der Seite, von der die Prägung vorgenommen wird, gegenüber angeordnet ist. Die Dicke der Mehrschichtfolie beträgt 5 bis 1000 µm, vorzugsweise 5 bis 350 µm, besonders bevorzugt 10 bis 200 µm. Dabei weist die außenliegende Polyesterschicht, von der die Prägung ausgehend vorgenommen wird, eine Dicke von wenigstens 0,01 µm auf, bevorzugt von 0,1 bis 10 µm, ganz besondere bevorzugt von 0,1 bis 5 µm. Die Dicke der Zwischenschicht beträgt wenigstens 0,5 µm, bevorzugt liegt sie zwischen 1 und 100 µm, besonders bevorzugt zwischen 2 und 40 µm. Die zweite außenliegende Polyesterschicht, welche der Seite, von der die Prägung vorgenommen wird, gegenüber angeordnet ist, weist eine Dicke von wenigstens 1 µm auf, bevorzugt von 1 bis 100 µm, besonders bevorzugt von 5 bis 50 µm.

Bevorzugt ist außerdem, daß die als Zwischenschicht eingesetzten Copolyester zwischen 5 und 50 Gew.-% Ethylenisophthalateinheiten enthalten.

Die Polyesterzwischen- und -außenschichten werden nach den üblichen, allgemein bekannten Verfahren coextrudiert, biaxial gestreckt und thermofixiert.

Bei der Prägung der Mehrschichtfolie geht man am besten so vor, daß man die Folie unter ausreichendem Druck in Kontakt mit einer strukturierten Fläche, bevorzugt einer Walze, bring, deren Struktur sich dann auf die Dreischichtfolie überträgt.

Die Herstellung der Schichtstoffplatten mit der geprägten Polyestertrennfolie geschieht wie eingangs bereits beschrieben in der üblichen Weise. Hierzu wird im einfachsten Fall eine Kernschicht, umfassend mehrere übereinander angeordnete Schichten aus faserhaltigem Material, welche mit einem hitzehärtbaren Kunstharz getränkt wurden, zusammen mit einer oberen oder einer oberen und einer unteren geprägten Trennfolie als Dekorschicht(en)als ein Schichtpaket unter Ausbildung des dekorativen Formteils in der Hitze bei 120 bis 180 °C und einem Druck von etwa 70 bar verpreßt. Nach dem Aushärten des hitzegehärteten Kunstharzes wird/werden die Trennfolie(n) von der ausgehärteten Schichtstoffplatte abgezogen. Gegebenenfalls kann die Trennwirkung durch einen auf die Trennfolie oder auf die Oberfläche des geschichteten Pakets aufgetragenen Lack erreicht oder verbessert werden.

Üblicherweise wird aber bei einem Preßvorgang nicht nur eine Schichtstoffplatte hergestellt, sondern gleich mehrere. Hierzu werden in eine geeignete Presse eine obere und eine untere Trennfolie eingelegt, und dazwischen befinden sich Schichtpakete aus mit hitzehärtbarem Kunstharz getränkten faserhaltigen Materialien, die jeweils die dekorativen Schichtstoffplatten bilden und die jeweils durch die geprägten Trennfolien mit dreischichtigem Aufbau voneinander getrennt sind.

Die für die häufigsten Anwendungszwecke übliche Breite der Schichtstoffplatten liegt im Bereich von 40 bis 220 cm, ihre Länge ist von der Größe der Herstellvorrichtung abhängig und kann bis zu 3 m betragen.

Erfindungsgemäß läßt sich die geprägte Polyestertrennfolie auch bei anderen Verfahren als den oben erläuterten einsetzen. Beispielsweise eignet sie sich gleichermaßen zur Strukturgebung von Metallfolien (Joghurtbecher-Abdeckungen) oder bei der Herstellung von Autoreifen; hier insbesondere als Trennfolie beim Aufwickeln der extrudierten unvulkanisierten Gummistreifen.

## Patentansprüche

1. Verwendung einer Folie mit strukturierter Oberfläche, erhalten durch Prägen einer prägbaren, gestreckten, biaxial orientierten und thermofixierten Mehrschichtfolie aus Polyestern, wobei diese Folie zwei außenliegende Polyesterschichten aus Polyethylenterephthalat umfaßt, zwischen die eine niedriger schmelzende Polyesterschicht aus einem Copolyester mit Ethylenterephthalat- und Ethylenisophthalateinheiten eingebettet ist, wobei diese Zwischenschicht aus einem Copolyester besteht, der zwischen 5 und 95 Gew.-% Ethylenisophthalateinheiten enthält, und die außenliegende Polyesterschicht, von der die Prägung ausgehend vorgenommen wird, in ihrer Stärke dünner ist als die zweite außenliegende Polyesterschicht zur Herstellung oberflächlich strukturierter Schichten.

2. Verwendung nach Anspruch 1, dadurch gekennzeichnet, daß die Gesamtfolienstärke der prägbaren Folie 5 bis 1000 µm beträgt, wobei die Stärke der Zwischenschicht wenigstens 0,5 µm beträgt.

3. Verwendung nach Anspruch 1 oder 2, dadurch gekennzeichnet, daß auf die strukturierte Oberfläche der Folie und/oder auf die zu strukturierende Oberfläche ein Lack aufgetragen wird.

4. Verwendung nach Anspruch 1, dadurch gekennzeichnet, daß die Oberfläche einer GFK, HPDL oder Schichtstoffplatte strukturiert wird.

5. Verwendung nach Anspruch 1 als Trennfolie bei der Herstellung von dekorativen Schichtstoffplatten.

6. Verwendung nach Anspruch 1 als Trennfolie bei der Autoreifenproduktion.

7. Verwendung nach Anspruch 1 als strukturierte Trennfolie bei der Herstellung strukturierter Metallfolien.

## Claims

1. The use of a film having a structured surface, obtained by embossing an embossable, stretched, biaxially oriented and thermofixed multilayer film of polyesters, this film comprising two outer polyester layers of polyethylene terephthalate, between which a lower-melting polyester layer of a copolyester with units of ethylene terephthalate and ethylene isophthalate is embedded, this interlayer being composed of a copolyester which contains between 5 and 95% by weight of ethylene isophthalate units, and the outer polyester layer, from which the embossing is carried out, having a thickness smaller than that of the second outer polyester layer, for producing superficially structured layers.

2. The use as claimed in claim 1, wherein the total film thickness of the embossable film is 5 to 1000 µm, the thickness of the interlayer being at least 0.5 µm.

3. The use as claimed in claim 1 or 2, wherein a varnish is applied to the structured surface of the film and/or to the surface which is to be structured.

4. The use as claimed in claim 1, wherein the surface of a GRP panel, HPDL panel or laminated panel is structured.

5. The use as claimed in claim 1 as a release film in the manufacture of decorative laminated panels.

6. The use as claimed in claim 1 as a release film in automotive tire manufacture.

7. The use as claimed in claim 1 as a structured release film in the manufacture of structured metal foils.

## Revendications

1. Utilisation d'une feuille à surface texturée, obtenue par gaufrage d'une feuille multicouche à base de polyesters, apte au gaufrage, étirée, orientée biaxialement et thermofixée, cette feuille comprenant deux couches externes de polyester à base de de poly(téréphtalate d'éthylène), entre lesquelles est insérée une couche de polyester à bas point de fusion, à base d'un copolyester à motifs téréphtalate d'éthylène et isophtalate d'éthylène, cette couche intermédiaire étant constituée d'un copolyester contenant entre 50 et 95 % en poids de motifs isophtalate d'éthylène, et la couche externe de polyester, à partir de laquelle est effectué le gaufrage, étant plus mince que la seconde couche externe de polyester, pour la fabrication de couches à surface texturée.

2. Utilisation selon la revendication 1, caractérisée en ce que l'épaisseur totale de la feuille apte au gaufrage va de 5 à 1 000 µm, l'épaisseur de la couche intermédiaire étant d'au moins 0,5 µm.

3. Utilisation selon la revendication 1 ou 2, caractérisée en ce qu'un vernis est appliqué sur la surface texturée de la feuille et/ou sur la surface à texturer.

4. Utilisation selon la revendication 1, caractérisée en ce que la surface d'un panneau en matière plastique renforcée à la fibre de verre, HPDL ou stratifié est texturée.

5. Utilisation selon la revendication 1, en tant que feuille de séparation dans la fabrication de panneaux stratifiés décoratifs.

6. Utilisation selon la revendication 1, en tant que feuille de séparation dans la production de pneus d'automobiles.

7. Utilisation selon la revendication 1, en tant que feuille de séparation texturée, dans la fabrication de feuilles métalliques texturées.
